Europäisches Patentamt

European Patent Office

Office européen des brevets

(19)

(11) Veröffentlichungsnummer: **0 044 456**
**B1**

(12) **EUROPÄISCHE PATENTSCHRIFT**

(45) Veröffentlichungstag der Patentschrift: **26.06.85**

(21) Anmeldenummer: **81105219.0**

(22) Anmeldetag: **04.07.81**

(51) Int. Cl.⁴: **H 01 Q 3/24,** H 01 Q 1/52,
G 01 S 1/40

(54) **Antennenanordnung eines Doppler-Drehfunkfeuers.**

(30) Priorität: **19.07.80 DE 3027451**

(43) Veröffentlichungstag der Anmeldung:
**27.01.82 Patentblatt 82/04**

(45) Bekanntmachung des Hinweises auf die
Patenterteilung:
**26.06.85 Patentblatt 85/26**

(84) Benannte Vertragsstaaten:
**DE FR GB IT NL**

(56) Entgegenhaltungen:
**CH-A- 268 059**
**DE-A-2 727 980**
**FR-A-1 474 178**
**GB-A-1 013 917**
**US-A-3 213 458**
**US-A-3 339 205**
**US-A-3 964 066**

**E. KRAMAR, "Funksysteme für Ortung und
Navigation", Verlag Berliner Union GmbH,
Stuttgart 1973, S. 131-146**

(73) Patentinhaber: **International Standard Electric
Corporation
320 Park Avenue
New York New York 10022 (US)**

(72) Erfinder: **Kautz, Werner
Engelbergstrasse 1
D-7015 Korntal (DE)**

(74) Vertreter: **Graf, Georg Hugo, Dipl.-Ing. et al
c/o Standard Elektrik Lorenz AG Patent- und
Lizenzwesen Postfach 300 929 Kurze Strasse 8
D-7000 Stuttgart 30 (DE)**

Courier Press, Leamington Spa, England.

**Beschreibung**

Die Erfindung geht aus von einer Antennenanordnung eines Doppler-Drehfunkfeurs wie im Oberbegriff des Anspruchs 1 angegeben, Eine derartige Antennenanordnung ist in dem Buch "Funksysteme für Ortung und Navigation", von E. Kramar, Verlag Berliner Union GmbH, Stuttgart 1973 auf den Seiten 139 bis 146 beschrieben. Sie enthält mehrere kreisförmig angeordnete Rundstrahlantennen.

Bei solchen Navigationseinrichtungen, ist es von größter Wichtigkeit, daß die HF-Signale genau in der vorgeschriebenen Weise angestrahlt werden. Soll beispielsweise zu einem Zeitpunkt nur von einer Antenne ein Signal abgestrahlt werden, dann ist dies bei kleinem Antennenabstand nahezu unmöglich. Die benachbarten Antennen erhalten von der strahlenden Antenne HF-Energie und wirken als Sekundärstrahler.

Aus der DE—A—27 27 980 ist ein Antennensystem bekannt, bei dem Einselantennen über ein Richtdiagrammformungsnetzwerk zusammengeschaltet sind. Dadurch können gewünschte Richtdiagramme erzielt werden. Auch bei diesem Antennensystem besteht das Problem, daß sich benachbarte Antennen bei einem geringen Antennenabstand störend beeinflußen. Die Störung wird dort dadurch vermindert, daß über Richtkoppler Energie zu benachbarten Einzelantennen übertragen wird. Der Betrag der übergekoppelten Energie ist so gewählt, daß die Energieabstrahlung einer Einzelantenne, die durch das Überkoppeln von Energie über den Richtkoppler bedingt ist, höher ist als die von derselben Einzelantenne aufgrund der Strahlungsverkopplung mit benachbarten Antennen abgestrahlte Energie. Die überkopplung von Energie mittels der Richtkoppler wird dazu ausgenützt, sonst nicht gewollte wirksame Antennen zur Verbesserung des Strahlungsdiagramms mitzuverwenden.

Aus der US—A—3 964 066 ist eine Antenne mit elektronisch gesteuerter Schwenkung eines Richtdiagramms bekannt, bei der die Einzelantennen über Energieverteilungsnetzwerke mit einer Strahlungsquelle verbunden sind.

Es ist die Aufgabe der Erfindung, eine Antennenanordnung eines Doppler-Drehfunkfeurs anzugeben, bei der benachbarte Antennen weitestgehend voneinander entkoppelt sind.

Die Lösung dieser Aufgabe erfolgt mit den im Anspruch 1 angegebenen Mitteln. Vorteilhafte Weiterbildungen sind den Unteransprüchen zu entnehmen.

Die Entkopplung bei der neuen Antennen-anordnung ist breitbandig. Die Antennen-anordnung kann an mehreren Stellen gleichzeitig gespeist werden. Der Reflexionsfaktor der einzelnen Antennen kann gemessen werden, wodurch in vorteilhafter Weise eine Überwachung der Antennenanordnung möglich ist.

Die Erfindung wird anhand er Zeichnungen beispielsweise näher erläutert. Es zeigt:

Fig. 1 ein Blockschaltbild der Antennenanordnung mit Entkopplungseinrichtung.

Fig. 2 Einzelheiten der Entkopplungseinrichtung.

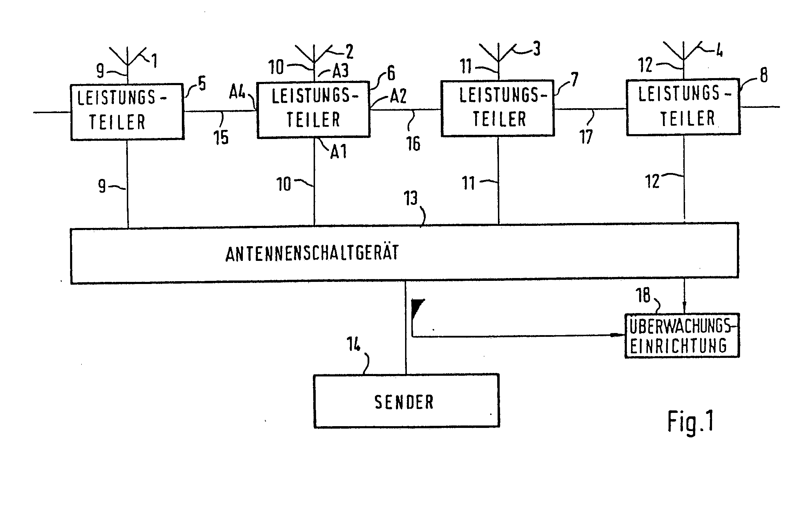

Bei der Antennenanordnung nach Fig. 1 sind mehrere Antennen 1, 2, 3, 4 jeweils über HF-Leitungen 9, 10, 11, 12 mit einem Antennen-schaltgerät 13 verbunden. Das Antennen-schaltgerât erhält von einem Sender 14 HF-Energie, die es einer oder mehreren der Antennen gleichzeitig oder nacheindander zuführt.

Bei der Antennenanordnung eines Doppler-Drehfunkfeurs, sind die Antennen kreisförmig angeordnet und sie werden nacheinander wirksam geschaltet. Das Antennenschaltgera8t wird nich näher erläutert, da es (z.B. aus dem Buch von E. Kramar oder einer der dort angezogenen literaturstellen allgemein bekannt ist.

Bei der neuen Antennenanordnung sind in die HF-Leitungen 9, 10, 11, 12 jeweils Leistungsteiler 5, 6, 7, 8 eingefügt, die jeweils vier Anschlüsse A1, A2, A3, A4 aufweisen. Ein Anschluß A1 ist mit dem Antennenschaltgerät 13, ein weiterer Anschluß A3 mit der Antenne 2 und die zwei restlichen Anschlüsse A2, A4 sind jeweils mit den Leistungsteilern 5, 7, die den benachbarten Antennen 1, 3 zugeordnet sind, verbunden.

Wenn die Antenne 2 ein Hf-Signal abstrahlt, d.h. wenn sie wirksam geschaltet ist, dann empfangen auch die Nachbarantennen 1, 3 die HF-Strahlung und strahlen sie als Sekundärstrahler wieder ab. Dies ist unerwünscht.

Deshalb führen die Leistungsteiler, z.B. 6, die der wirksam geschalteten Antenne 2 zugeordnete HF-Energie nicht nur dieser Antenne zu, sondern sie zweigen einen Teil dieser HF-Energie ab und führen diese den benachbarten Antennen 1 und 3 zu. Die Leistungsteiler und die weiteren HF-Leitungen 15, 16 sind dabei so bemessen, daß die den Antennen 1 und 3 auf diese Weise zugeführte HF-Energie die von der Antenne 2 abgestrahlte und von den Antennen 1 und 3 empfangene HF-Energie kompensiert. Dann wirken die Antennen 1 und 3 nicht mehr als Sekundärstrahler, sondern sie sind voneinander entkoppelt.

Die Bemessung der Leistungsteiler und der HF-Leitungen hängt u. a. ab von der abzustrahlenden Leistung, dem Aufbau der Antennen und dem räumlichen Abstand der Antennen. Kennt der Fachmann der Aufbau der neuen Antennenanordnung mit der Entkoppelungseinrichtung und die Betriebsdaten, dann kann er die Dimensionierung (Einfluß auf Amplitude und Phase) leicht ermitteln.

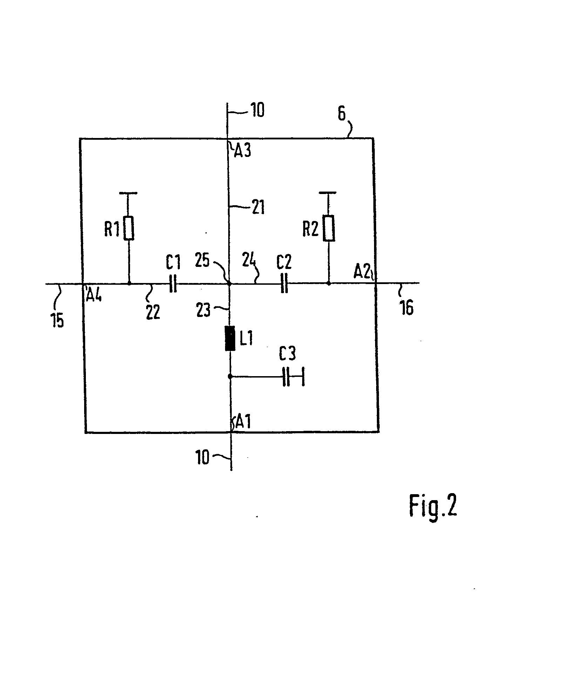

Anhand der Fig. 2 wird eine einzelner Leistungsteiler 7 näher erläutert.

Leitungen 21, 22, 23, 24 führen von den Anschlüssen zu einem Sternpunkt 25 im Leistungsteiler 6. In die Leitungen 22 und 24, die mit den Anschlüssen A4 und A2 verbunden sind, sind Kondensatoren C1 und C2 eingefügt. Durch ihre Dimensionierung wird das Teilungsverhältnis des Leistungsteilers festgelegt.

Widerstände R1 zwischen Leitung 22 und Masse und R2 zwischen Leitung 24 und Masse sowie eine Induktivität L1 in der Leitung 23 und eine Kapazität C3 zwischen Leitung 23 und Masse dienen zur Widerstandsanpassung der Anschlüsse.

Der Ausgangswiderstand des Senders ist 50 $\Omega$.C1 und C2 haben 27 pF, R1 und R2 haben 50 $\Omega$. L1 und C3 sind so gewâhlt, daß der Sternpunkt 25 vom Sender aus gesehen einen Widerstand von 50 $\Omega$ und von der Antenne aus gesehen einen Widerstand von ca. 15 $\Omega$ hat.

Es ist wichtig, daß von der Antenne aus gesehen eine Fehlanpassung zum Sendern vorhanden ist, d.h. der Anschluß A3 des Leistungsteilers, der mit de Antenne 2 verbunden ist, ist nicht an die Antenne angepaßt. Durch diese Fehlanpassung erfolgt nur eine klene parasitäre Anregung der Antenne, wodurch die Entkopplung weiter verbessert wird.

Ist eine der Antennen gestört, dann ändert sich auch ihr Eingangswiderstand, was wiederum Rückwirkungen auf den Widerstand des mit dem Antennenschaltgeräts verbundenen Anschlusses A1 hat. Zum Antennenschaltgerät 13 wird Leistung reflektiert, wenn der Anschluß A1 infolge der Widerstandsänderung am Antenneneingang nicht mehr angepaßt ist. Verbindet man die Leitungen 9, 10, 11 und 12 mit jeweils einem Richtkoppler, der einen Teil des zum Antennenschaltgerät 13 rückfließenden Strom auskoppelt, dann gibt das Ausgangssignal des Richtkopplers an, ob die ihm zugeordnete Antenne gestört ist.

Anstelle jede dieser Leitungen mit einem Richtkoppler zu verbinden, reicht eu aus, nur den von Antennenschaltgerät 13 zum Sender 14 zurückfließenden Strom auszukoppeln. Das Ausgangssignal der Richtkopplers zeigt dann an, ob eine der Antennen gestört ist. Zusammen mit dem Anschaltrhythmus des Antennenschaltgerätes 13 erkennt man in einer überwachungseinrichtung 18, welche Antennen gestört sind. Dies kann in besonders vorteilhafter Weise zur überwachung der Antennenanordnung ausgenutzt werden.

**Patentansprüche**

1. Antennenanordnung eines Doppler-Drehfunkfeurs mit mehreren Antennen (1, 2, 3, 4), bei der jeweils die einzelnen Antennen von einem Antennenschaltgerät (13) so wirksam gesteuert werden, daß die Bewegung von einer oder zwei rundstrahlenden Strahlungsquellen simuliert wird, und bei der alle Antennen über jeweils eine HF-Leitung (9, 10, 11, 12) mit diesem Antennenschaltgerät verbunden sind, dadurch gekennzeichnet, daß in jede der HF-Leitungen (9, 10, 11, 12) ein Leistungsteiler (5, 6, 7, 8) mit vier Anschlüssen (A1, A2, A3, A4) eingefügt ist, wobei diese Anschlüsse jeweils einzeln dem Antennenschaltgerät (13), mit der dem Leistungsteiler angeordneten Antenne (1, 2, 3, 4) und mit den den benachbarten Antennen zugeordneten Leistungsteilern über weitere HF-Leitungen (15, 16, 17) verbunden sind, und daß die Leistungsteiler so dimensionert sind, daß die von ihnen ausgekoppelten HF-Signale, die den Leistungsteilern benachbarten Antennen zugeführt werden, die HF-Signale, die diese Antennen infolge der Strahlungsverkopplung mit benachbarten Antennen erhalten, kompensieren.

2. Antennenanordnung nach Anspruch 1, dadurch gekennzeichnet, daß die den Antennen (1, 2, 3, 4) zugeordneten Anschlüsse (9, 10, 11, 12) der Leistungsteiler (5, 6, 7, 8) Widerstände haben, die ungleich den Eingangs-widerständen der Antennen sind.

3. Antennenordnung nach Anspruch 1, dadurch gekennzeichnet, daß die den weiteren HF-Leitungen (15, 16, 17) zugeordneten Anschlüsse der Leistungsteiler (5, 6, 7, 8) Widerstände haben, die gleich den Eingangswiderständen der Antennen (1, 2, 3, 4) sind.

**Revendications**

1. Ensemble d'antennes destinées à un radiophare tournant Doppler comportant plusieurs antennes (1, 2, 3, 4), dans lequel les antennes individuelles sont excitées par une appareil de commande d'antennes de façon à simuler le mouvement d'une ou de deux sources de rayonnement omnidirectional, et dans lequel toutes les antennes sont reliées audit appareil de commande d'antennes par des lignes HF (9, 10, 11, 12), caractérisé en ce que sur chacune des lignes HF (9, 10, 11, 12) est placé un diviseur de puissance (5, 6, 7, 8) à quatre bornes (A1, A2, A3, A4) qui sont reliées individuellement à l'appareil de commande d'antennes (13), à l'antenne à laquelle est affecté le diviseur de puissance (1, 2, 3, 4) et, par d'autres lignes HF (15, 16, 17), aux diviseurs de puissance affectés aux antennes voisines, et en ce que les diviseurs de puissance sont dimensionnés pour que les signaux HF qu'ils découplent et qui sont dirigés vers les diviseurs de puissance des antennes voisines compensent les signaux HF que reçoivent ces antennes en raison du couplage par rayonnement so produisant avec les antennes voisines.

2. Ensemble d'antennes conforme à la revendication 1, caractérisé en ce que les bornes (9, 10, 11, 12) des diviseurs de puissance (5, 6, 7, 8) affectées aux antennes (1, 2, 3, 4) possèdent des impédances différentes des impédances d'entrée des antennes.

3. Ensemble d'antennes conforme à la revendication 1, caractérisé en ce que les bornes des diviseurs de puissange (5, 6, 7, 8) affectées aux autres lignes HF (15, 16, 17) possèdent des impédances qui sont égales aux impédances d'entrée des antennes (1, 2, 3, 4).

**Claims**

1. Antenna array of a Doppler radio beacon with a plurality of antennas (1, 2, 3, 4) wherein the individual antennas are activated by an antenna switching device (13) in such a way that the movement of one or two omnidirectional radiation sources is simulated and wherein all antennas are connected to this antenna switching device via one RF line (9, 10, 11, 12) each, characterized in that each of the RF lines (9, 10, 11, 12) contains a power divider (5, 6, 7, 8) having four terminals (A1, A2, A3, A4) each individually connected to the antenna switching device (13), to the antenna (1, 2, 3, 4) associated with the power divider and, via additional RF lines (15, 16, 17), to the power dividers associated with the adjacent antennas, and that the power dividers are so dimensioned that the RF signals extracted by them, which are fed to the power dividers of adjacent antennas, compensate the RF signals received by these antennas owing to the radiation cross-coupling with adjacent antennas.

2. An antenna array as claimed in Claim 1, characterized in that the terminals (9, 10, 11, 12) of the power dividers (5, 6, 7, 8) which are associated with the antennas (1, 2, 3, 4) have impedances unequal to the input impedances of the antennas.

3. An antenna array as claimed in Claim 1, characterized in that those terminals of the power dividers (5, 6, 7, 8) which are associated with the additional RF lines (15, 16, 17) have impedances equal to the input impedances of the antennas (1, 2, 3, 4).

Fig.1

Fig.2

2